# EUROPEAN PATENT SPECIFICATION

(11) **EP 2 770 015 B1**
(45) Date of publication and mention of the grant of the patent: **28.03.2018**
(21) Application number: 13156798.4
(22) Date of filing: 26.02.2013
(51) Int. Cl.: C08J 11/04, C08K 5/5419, C08L 67/02

(54) **UPGRADING POLYESTER WASTES WITH SILANES AND THEIR BLENDS**
AUFWERTUNG VON POLYESTERABFÄLLEN MIT SILANEN UND DEREN MISCHUNGEN
VALORISATION DE DÉCHETS DE POLYESTER AVEC DES SILANES ET LEURS MÉLANGES

(43) Date of publication of application: 27.08.2014
(73) Proprietor: Armacell Enterprise GmbH & Co. KG, 12529 Schönefeld OT Waltersdorf (DE)
(72) Inventor: Dolega, Justyna, 4800 Petit Rechain (BE); Meller, Mika, 04400 Jarvenpaa (FI)
(74) Representative: von Füner, Nicolai

(56) References cited:
- DE-A1- 4 224 769
- US-A- 4 551 485
- DATABASE WPI Week 201321 Thomson Scientific, London, GB; AN 2013-C49519 XP002697691, & CN 102 775 744 A (FOSHAN SHUNDE SHUANYAN PLASTIC CO LTD) 14 November 2012 (2012-11-14)

## Description

### Summary of the invention:

This invention describes a process of polyester waste upgrading by means of chemical treatment with silanes and their blends and the upgraded final product which is characterized by a semicrystalline structure and improved thermal and hydrolytic stability, resulted from the reduced overall carboxyl content.

### Description of the invention:

Poly(ethylene terephthalate) (PET) is one of the widely used polycondensation polymers thanks to its excellent mechanical and thermal properties, chemical resistance as well as recyclability. The recycling of polyester waste, especially of PET is an important environmental topic due to its widespread use, abundance and availability. PET is used for stretch-blown bottles, packaging (strips, foils, blisters and foams) and for the production of fibre for textile products. Unfortunately each melt processing cycle leads to deterioration of PET properties resulting from thermal, hydrolytic and thermooxidative degradation. Such a strong degrading tendency during the melt processing is specific for all polycondensation polymers and it is always noticed during a solid state synthesis (SSP) or in the first processing cycle of the virgin material. Moreover, even though the mechanical recycling of PET is now well established, it does not guarantee complete removal of all contaminations, such as other plastics residues (PVC, PS, PE, EVA, PA), colorants, adhesives, dust, absorbed chemicals (oil, flavours, water, household chemicals), what further decreases the quality of post-consumer grades.

The mechanism of PET depolymerization is widely described in the art (J. Scheirs and T. E. Long "Modern Polyesters: Chemistry and Technology of Polyesters and Copolyesters" John Wiley & Sons (2003), F. Awaja and D. Pavel "Review. Recycling of PET" European Polymer Journal, 41 (2005) p. 1453-1477). It is known that both thermal-oxidative and hydrolytic degradation leads to increased concentration of carboxylic end groups (-COOH). Degradation reactions cause severe drop of the average molecular weight of the polymer as a result of shorter macromolecules formation. In practice, this phenomenon is reflected by reduced intrinsic viscosity (IV), deteriorated melt strength and worse melt processability of recycled PET (rPET). Because of increased content of carboxylic end groups the further degradability of obtained post-consumer PET becomes more and more pronounced. In borderline cases the degree of degradation may significantly limit the fields of application to the ones requiring low performance properties or may completely exclude further reprocessing.

Standard solutions to prevent losing of properties during melt processing of PET include adding various thermal and hydrolytic stabilizers. Such an approach is presented in US4075263, where the polymers containing cyclic ketal and cyclic acetal units are applied as the moisture scavengers. Some commercially available products are recommended for processing and thermal stabilization of PET: Irganox® HP 2215, Irganox® B 561 and Irganox® 1425 by Ciba Specialty Chemicals are the examples. Certain organophosphorus compounds can be also used, such as 3,5-di-tert-butyl-4-hydroxybenzyl diethyl phosphate (Irganox® 1222) and triphenylphosphate, providing a reduction in the concentration of terminal carboxyl groups of PET, thus leading to improved hydrolytic stability. Another widely used group of modifiers are carbodiimides and polycarbodiimides (referred in US5885709 and in US38521010), known from its reactivity with carboxylic end groups of PET and bringing noticeable improvement of hydrolytic stability. Unfortunately these kinds of stabilizers are quite expensive, so even with low filling level they will significantly increase the cost of recycled PET. Moreover their mechanism of working based on the reaction with carboxylic end groups but without any significant increase of molecular weight of polymer, so also no IV changes. It is known that the mechanical recycling operations and subsequent granulation of post-consumer PET leads to a decrease of intrinsic viscosity of resulted granules and simple adding of processing stabilizers and thermal stabilizers can not prevent this phenomenon. The most common solution up to date is use of solid state polymerization after the mechanical recycling process, but is commercially challenging because of relatively high investment required and process being time and energy consuming.

In this invention the use of organosilanes is proposed as a method of improvement of the thermal and hydrolytic stability of polyester waste, especially of post-consumer PET. Usually the functional silanes are used as compatibilizing or coupling agents, binding the reinforcements (e.g. inorganic fillers as mica, talc, caolin, silica or clay particles but also glass fibres, polyhedral oligomeric silsesquioxane (POSS) or metals) with polymer carrier matrix. Some examples are reported in KR20100065130, KR20070104014 and KR20020062403. Silicone derivatives may also bring a new functionality to the PET surface (new types of reactive sites), enabling easier dyeing of polyester fibers and mats or improving their printability, soiling resistance and water repellency. Such a function of silanes is described in US5759685, US4311760 and US4247592. Ragan et al. reported in US4551485 that small amounts of organofunctional silane may significantly improve the impact strength of poly(ethylene terephthalate) blends. In US20060094793 two methods of PET waste treatment with the use of (1) polysiloxane and phthalate plasticizer mixture and (2) silazane and silane mixture are proposed. Resulted recyclates are reported to show enhanced elasticity, increased crystallization temperature and improved hydrolytic stability. In WO2006006064 the method of PET modification leading to silicon bonding into the molecular structure of polymer is described. Unfortunately the modification process in carried in the polymer melt - silicon containing modifying agent is dropped onto molten polymer and allowed to react with PET. Thereby this process leads to undesirable side reactions arising from the hydrolytic or thermal decomposition of silicon additives, with a release of alcohol in the case of tetraethyl orthosilicate (TEOS) or ammonia in the case of hexamethyldisilazane (HMDS). Both by-products cause the depolymerization of PET at the early stage of processing either via alcoholysis or ammonolysis.

The general structure of organosilanes used for PET waste modification is shown in the Formula 1, where X is a readily hydrolyzable group such as alkoxy (e.g. -OCH₃, -OCH₂CH₃, etc.), polyalkoxy (e.g. -OCH₂CH₂OCH₃, -OCH₂CH₂OCH₂CH₃, etc.) or halogen (e.g. Cl, Br, I) and R represents an organofunctional group attached to silicon by an alkyl bridge.

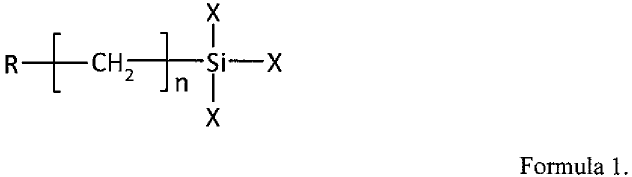

The newly applied organosilanes of the structure presented in the Formula 1 and tested in this invention are listed in Table 1. These components were used independently or in a mixture with additives referred in Table 2.

**Table 1: The chemical structure of organofunctional silanes used for PET waste modification:**

| **Short name** | **Full name** | **CAS** | **R** | **X** | **n** |
|---|---|---|---|---|---|
| MOPTMS | 3-methacryloxypropyltrimethoxysilane | 2530-85-0 | 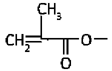 | OCH₃ | 3 |
| GOPTMS | 3-glycidoxypropyltrimethoxysilane | 2530-83-3 | 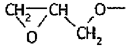 | OCH₃ | 3 |

**Table 2: The chemical structure of silicon derivatives used for PET waste modification:**

| **Short name** | **Full name** | **CAS** | **Formula** |
|---|---|---|---|
| TEOS | tetraethyl orthosilicate | 78-10-4 | Si(OCH₂CH₃)₄ |
| HMDS | hexamethyldisilazane | 999-97-3 | NH(Si(CH₃)₃)₂ |
| DPSD | diphenylsilandiol | 947-42-2 | Si(OH)₂(C₆H₆)₂ |

The recycling of post-consumer PET was done accordingly to the standard scheme of bottles stream mechanical recycling, with additional step of chemical modification in the presence of silicon-based modifier(s). The term "post consumer" is defined as material being brought back into the process - i.e. being recycled - after its prior use, e.g. as PET bottles. Baled and compacted PET bottles are opened and sorted by color and material type. The unwanted color fractions and materials as paper and metal are separated.

Before the sorting process bottles could be initially shredded and washed to remove the labels. The pre-sorted bottles are then finely chopped into flakes and float separated from the other plastics based on density differences. The PET flakes are then washed in a cleaning solution, rinsed, dried and modified at elevated temperature in the presence of the selected modifiers. Resulted flakes are then granulated and their properties are analyzed. Concentration of carboxyl end groups (CEG) was determined by photometric titration, based on the ASTM D 7409-07 standard. Intrinsic viscosity (IV) was examined via dilute solution viscosity measurement, based on the ASTM D 2857 standard. Degree of crystallinity (X_{c}), temperature of melting (Tₘ) and crystallization (T_{c}) were determined by means of differential scanning calorimetry (DSC), accordingly to the ISO 11357-3:2011 recommendations.

In this application, the term upgrading refers to the process of chemical modification of polyester wastes with the use of organofunctional silanes and/or blends thereof, leading to improved thermal and hydrolytic stability of the modified product compared to its non-treated counterpart, as a result of reduced concentration of carboxylic end groups (CEG). The upgraded product in this context is the product resulting from such a modification and exhibiting such properties.

### Examples

### Modification of clear bottle grade PET

Shredded, washed and dried flakes of clear recycled PET without any further post-processing (as chemical upgrading or granulation) were tested to get the reference values (comparative example 1 (CE1)). The same sample was then extruded and granulated to estimate the influence of additional thermal processing cycle on the properties of reprocessed PET (comparative example 2 (CE2)). Temperature profile in 4 sections of HAAKE Polylab® equipped with twin-screw extruder CTW100 was set from 220°C in dosing zone to 255°C in extruder head. Air-cooled strands were further pelletized and slowly cooled down on a vibrating table.

Clear PET flakes of the example CE1 were also chemically modified with the use of different silicon derivatives and blends thereof. In comparative example 3 (CE3) clear flakes were charged to small rotating drum at the temperature of 130°C and treated with 1 wt. % of TEOS based on the weight of the polyester waste for 1 h. After this time PET flakes were granulated and the properties of resulted CE3 sample were examined. Similar modification but with a slightly lower amount of TEOS (of about 0,93 wt. %) and direct extrusion melt-processing is described in the Example 2 of the WO2006006064.

Newly proposed compounds used for clear PET flakes modification are MOPTMS, tested in innovative example 1 (IE1) and GOPTMS, applied in innovative example 2 (IE2). Both components were loaded to rotating drum in 5 wt. % concentrations against the mass of modified PET, mixed together with flakes for 1 h at the temperature of 160°C for MOPTMS containing and at 80°C for GOPTMS containing recipe. The difference in modification temperatures resulted from different thermal stability and volatilization temperature range of both organofunctional silanes. Modified flakes IE1 and IE2 were granulated and examined accordingly to the procedure adopted for modification efficiency evaluation.

The last part of clear flakes modification included treatment of PET with the blends of TEOS and different silicon derivatives, with constant blend load of 5 wt. % based on the weight of the polyester waste. In comparative example 8 (CE8) the mixture of TEOS and HMDS (40/60 wt. % ratio) was applied, in innovative example 4 (IE4) TEOS was blended with GOPTMS in the same weight ratio and, last but not least, in innovative example 5 (IE5) the combination of TEOS and MOPTMS (also 40/60 wt. % ratio) was implemented. In all the modification processes the temperature of treatment was 130°C and the reaction was continued for 1 h. After this time samples were granulated and tested.

### Modification of green bottle grade PET

The modification and granulation of green bottle grade PET was done in exactly the same way as all the above mentioned tests based on the clear flakes stream. Again the unmodified flakes (comparative example 4, CE4) and granulated but chemically untreated flakes (comparative example 5, CE5) were tested as the reference samples to assess the initial values and the influence of thermal treatment during granulation.

The chemical modification presented in comparative example 6 (CE6) is basically a repetition of the Example 2 provided in US20060094793. Resulted product was claimed to have a better flexibility and heat stability. The process included treatment of green flakes with the mixture of DPSD and HMDS in 40/60 wt. % ratio, using 5 wt. % load of modifiers blend against the amount of green flakes, at 130°C for 1 h. Treated flakes were then granulated and tested. In comparative example 7 (CE7) TEOS was exclusively used as a single modifying ingredient in the concentration of 5 wt. % based on the weight of the polyester waste. Modification conditions and further granulation process stayed the same as in above described CE6.

The same modification procedure was repeated in innovative examples from 6 (IE6) to 9 (IE9): the load of modifiers was fixed as 5 wt. % based on the weight of the polyester waste, the time and temperature of modification were set as 1 h and 130°C. The only difference was in the composition of used modifiers. In IE6 - GOPTMS was exclusively used as a single modifying ingredient whilst in examples IE7, IE8 and IE9 the blends of these two components (TEOS/ GOPTMS) with the ratios of 30/70 wt. %, 50/50 wt. % and 70/30 wt. %, respectively. All the samples were granulated and resulted pelletized rPET was characterized in terms of chosen physical and chemical properties.

### Results and discussion

Tables 3 and 4 show the influence of processing and modification with the use of different silicon derivatives or blends thereof on the properties of clear (see CE1 - CE3 and CE8 and IE1, IE2, IE4 and IE5) and green (see CE4 - CE7 and IE6 - IE9) PET flakes, respectively.

**Table 3: Effectiveness of the modification of clear PET produced from waste bottles.**

| **Example** | **Modifier** | **CEG [mmol/kg]** | **IV** |
|---|---|---|---|
| CE1 | clear flakes without modifier | 32.4 | 0.66 |
| **CE2** | **granulated flakes without modifier** | **37.6** | **0.65** |
| CE3 | TEOS | 34.4 | 0.69 |
| IE1 | MOPTMS | 35.7 | 0.68 |
| IE2 | GOPTMS | 29.8 | 0.68 |
| CE8 | TEOS/ HMDS 40/60 wt.% | 35.8 | 0.68 |
| IE4 | TEOS/ GOPTMS 40/60 wt.% | 30.2 | 0.70 |
| IE5 | TEOS/ MOPTMS 40/60 wt.% | 35.9 | 0.69 |

**Table 4: Effectiveness of the modification and chosen properties of green PET produced from waste bottles.**

| **Example** | **Modifier** | **CEG [mmol/kg]** | **IV** | **X_{c} [%]** | **Tₘ [°C]** | **T_{c} [°C]** |
|---|---|---|---|---|---|---|
| CE4 | green flakes without modifier | 26.7 | 0.76 | 26.1% | 242 | 186 |
| **CE5** | **granulated flakes without modifier** | **39.8** | **0.63** | **27.3%** | **245** | **193** |
| CE6 | DPSD/ HMDS 40/60 wt.% | 39.5 | 0.60 | 27.3% | 245 | 196 |
| CE7 | TEOS | 39.2 | 0.61 | 30.2% | 245 | 194 |
| IE6 | GOPTMS | 22.5 | 0.54 | 36.2% | 246 | 202 |
| IE7 | TEOS/ GOPTMS 30/70 wt.% | 26.4 | 0.57 | 26.2% | 247 | 198 |
| IE8 | TEOS/ GOPTMS 50/50 wt.% | 27.5 | 0.59 | 28.6% | 247 | 197 |
| IE9 | TEOS/ GOPTMS 70/30 wt.% | 32.0 | 0.61 | 31.2% | 246 | 196 |

Values obtained for granulated flakes without any additional modification (CE2 and CE5) show the effect of PET degradation caused by additional melt processing cycle. Both types of flakes show a degradation manifested by increased CEG concentration and decreased IV (see CE1 compared to CE2 and CE4 compared to CE5, respectively), however there is a clear difference between clear (CE1 and CE2) and green (CE4 and CE5) waste streams. The green recycled material is more sensitive to thermal treatment and more susceptible to thermal degradation during post-processing than its clear counterpart.

TEOS, used in CE3 with a pretty low concentration as suggested in the Example 2 of the WO2006006064, shows a very good modification efficiency - IV increase of about 6% versus the value observed for untreated granulate (see CE3 compared to CE2), whilst CEG decrease of about 8,5%, proving reaction between the carboxyl end groups of PET and modifier. However, the question arises if similar good results could be obtained with reactive melt-processing in the presence of TEOS, as proposed in the referenced patent. It is known that the reaction with TEOS leads to formation of by-products, as water or alcohol. Both types of chemicals are well known as strong depolymerizing agents for step-growth polymers (so also PET) and are used for chemical recycling of polyesters via alcoholysis or hydrolysis (J. Scheirs and T. E. Long "Modern Polyesters: Chemistry and Technology of Polyesters and Copolyesters" John Wiley & Sons (2003), Chapter 16. *Recycling Polyesters by Chemical Depolymerization*). In the closed environment of extrusion used for silanes treatment in WO2006006064 the majority of by-products will immediately react with PET, leading to worsen quality. Some amount of volatiles will be drawn off in degassing zone but concerning the inferior and surface diffusion (diffusion of reaction by-products from the interior of the polymer melt to the surface and from the surface into the bulk of the gas phase, respectively) as well as the kinetics of PET reactions with volatiles, this volume will be limited. With a rotating drum or a similar kind of reactor-mixer there are several factors speaking for the better efficiency of the modification process compared to the melt-extrusion. Firstly, the modified polymer is still in a solid, unmolten form, containing the highly packed crystalline fraction that is much more resistant for chemical attack than the amorphous one, which exists in the melt. Moreover, the form of flakes enhances kinetics of the by-products diffusion process because their surface is much larger (better surface diffusion) and thickness of individual flake is much lower (shorter diffusion path and improved inferior diffusion). And finally, the reactor is not completely sealed, so the evaporated by-products of reaction may be removed from the environment of reaction.

The blend of DPSD/ HMDS used in CE6, that - as already mentioned- is a repetition of the Example 2 provided in the US20060094793, does not show significant improvement of PET properties (CE6 compared to CE5). CEG stays almost unchanged, whilst IV is slightly lower (that is the case for all the modified products of green flakes). The use of bifunctional DPSD in a mixture with HMDS silanizing agent reacting mainly with hydroxyl end groups (HEG) cannot lead to improved thermal resistance and hydrolytic stability of resulted PET. In fact, the ratio of CEG/HEG in the resulted product should be higher as a result of decreased HEG concentration, so the hydrolytic stability of the modified polyester will be even worse. The additional drawback of this modification is the possible formation of the ammonia, leading to further degradation of PET via ammonolysis. A similar experiment was repeated with the use of TEOS/ HMDS blend in CE8, and again, the presence of HMDS leads to worse results compared to CE3, where in the same modification conditions only TEOS was applied.

Two new components proposed for waste PET modification belongs to the group of organofunctional silanes. MOPTMS contains the methacrylate functional group capable of forming carbon-to-carbon bonds by polyaddition and hydrolysable methoxy groups reacting by hydrolytic polycondensation to form siloxane chains. This component was tested as an individual modifier in IE1 and in a blend with TEOS in IE5. In both cases it shows lower than expected hydrolytic stability improvement potential - CEG concentration is just 5% lower compared to untreated granulate and immediate IV increasing potential - up to 6% versus the reference. The main obstacle in the effective use of this chemical seems to be its high boiling point range, close to 255°C. It means that at the temperature of modification, that was fixed to 160°C the evaporation rate is still quite low and the kinetics of polycondensation and polyaddition reactions is limited. The process of chemical modification is then further continued during extrusion of still dry flakes, but this type of melt modification includes all the disadvantages discussed above in the case of melt-processing with TEOS.

The second organofunctional silane, GOPTMS, contains the reactive epoxy group (glycidoxy functionality) reacting via ring opening polyaddition with nucleophiles and, similarly as MOPTMS, hydrolysable methoxy groups reacting by polycondensation. GOPTMS was proved to have the best performance as the modifying agent of waste PET, with the highest reduction of CEG concentration and highest increase of IV. In IE2 and IE6 GOPTMS was used as an individual modifier of clear and green PET flakes, respectively, but with different temperature settings. In the first case the temperature of modification was 80°C and the results obtained for this process conditions were the best ever - CEG concentration was reduced by 20% versus the untreated granulate (IE2 compared to CE2) and reached even the lower value than noticed for initial flakes before granulation (8% reduction) (IE2 compared to CE1). The second modification based on the green flakes and conducted at 130°C led to even better reactivity with CEG, resulting in over 40% reduction of COOH groups of rPET compared to the untreated granulate (IE6 compared to CE5) and almost 16% versus the initial flakes (IE6 compared to CE4) but the side reactions of alcoholysis caused the chain scissions and decrease of average molecular weight of chains, resulting in reduced IV. This phenomenon is easy to explain keeping in mind that the boiling point of GOPTMS is close to 138°C but the thermal decomposition especially in the presence of the traces of water starts already above 75°C. So in the case of GOPTMS containing recipes the good balance of concentration of modifier, time and temperature of modification is required.

The TEOS/ GOPTMS blends were tested at the same temperature of 130°C but with different components ratio (IE4, IE7, IE8, IE9). Clear PET flakes described in IE4 were modified with the use of blend 40/60 wt. % TEOS/GOPTMS and showing again good effectiveness of modification: CEG concentration was reduced of 20% versus the granulate (IE4 compared to CE2) and 6% versus the initial flakes (IE4 compared to CE1) and IV was elevated to the highest 0.70 level. Green PET flakes were chemically modified with the use of three subsequently changed concentrations of TEOS/GOPTMS (IE7, IE8, IE9), starting from 30/70 wt. % level in IE7, through 50/50 wt. % in IE8 and finally with 70/30 wt. % ratio for IE9. The results show a clear trend of CEG concentration reduction proportionally to higher loads of GOPTMS (20%, 31% and 33% of reduction for IE9, IE8 and IE7 respectively compared to CE5) and at the same time IV values are getting worse (10%, 6% and 3% respectively) (IE9, IE8 and IE7 compared to CE5, respectively).

Besides the changes of IV and CEG also the thermal properties of resulted granulates were evaluated. The results are presented in Table 4 (see Tₘ and T_{c}). Silicon bridges integrated in the PET molecule play a role of nucleating species, providing higher degree of crystallinity, higher melting point of crystalline phase of PET and higher crystallization temperature. TEOS and DPSD/ HMDS modified granulates presented in CE7 and CE6, respectively, have a very similar properties to these of untreated CE5 sample. The best values were noticed for GOPTMS and its blends, and among them the best compromise of IV, CEG and crystallinity behavior is obtained for IE9 and IE8 rPETs.

Thus, the process for upgrading polyester wastes, especially PET leads to an improved thermal and hydrolytic stability of the modified, i.e. the upgraded product. The upgraded final product shows a semicrystalline structure containing more than 20% of crystalline phase enabling its preheating and/or drying prior to further post-processing without sticking and agglomeration of the polyester particles. Moreover, a CEG concentration of the upgraded product is preferably at least 4% lower than the unmodified, i.e. not upgraded polyester waste. Depending on the composition of modifier or modifiers mixture used for upgrading as well as on the initial CEG concentration of the unmodified polyester waste the final CEG resulted from chemical modification proposed in this invention is increasing in the following order:
- for clear bottle grade PET:
   CE2 (reference) > IE5 (4,5% CEG reduction) > CE8 (4,8% CEG reduction) > IE1 (5,1% CEG reduction) > IE4 (19,7% CEG reduction) > IE2 (20,7% CEG reduction);
- for green bottle grade PET:
   CE5 (reference) > IE9 (19,6% CEG reduction) > IE8 (30,9% CEG reduction) > IE7 (33,7% CEG reduction) > IE6 (43,5% CEG reduction).

## Claims

1. A process for upgrading a poly(ethylene terephthalate) waste wherein the poly(ethylene terephthalate) waste is mixed with silicon-based modifier(s) and wherein the silicon-based modifier(s) are organofunctional silanes of the Formula 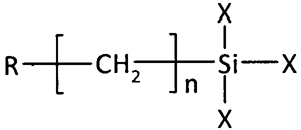 wherein X is a readily hydrolyzable group selected from alkoxy, polyalkoxy or halogen and R represents an organofunctional group attached to silicon by an alkyl bridge and their blends with silicon derivatives selected from the group of siloxanes, silazanes, silicates or silanes, both in linear or branched form, including their monomeric, oligomeric, polymeric or copolymeric forms, in a mono- and multifunctional form, as well as macromers thereof, in a total concentration of 0.01-10 wt.%, based on the weight of the poly(ethylene terephthalate) waste and wherein the process comprises the following steps:
• mechanical recycling of poly(ethylene terephthalate) waste stream, including standard shredding, sorting, washing, rinsing and drying operations to obtain flakes,
• chemical upgrading of the flakes in a reactor by mixing the polyester flakes in the presence of said silicon-based modifier(s) at an elevated temperature of less than 200°C and with a residence time of one hour or less,
• extrusion followed by granulation to produce the semicrystalline final product,
wherein the step of chemical upgrading of the flakes is leading to improved thermal and hydrolytic stability of the modified product compared to its non-treated counterpart, as a result of a reduced concentration of carboxylic end groups (CEG).

2. The process according to claim 1 wherein the organofunctional silanes are selected from the group of vinyl or divinyl terminated silanes, allyl terminated silanes, 3-aminopropyl- or bis(2-hydroxyethyl)-3-aminopropyl- terminated silanes as amine derivatives, 2-(3,4-epoxycyclohexyl)ethyl- and 3-glycidoxypropyl-terminated silanes as epoxy derivatives, isocyanatopropyl- terminated silanes as isocyanate derivative, 3-methacryloxypropyl-terminated silanes as methacrylate derivative and 2-(diphenylphosphino)ethyl-terminated silanes as phosphine derivative.

3. The process according to anyone of the preceding claims wherein the total concentration of the silicon-based modifier(s) is 0.1-5 wt.% based on the weight of the poly(ethylene terephthalate) waste.

4. The process according to claim 3 wherein the temperature is less than 150°C.

## Patentansprüche

1. Verfahren zur Veredelung eines Poly(ethylenterephthalat)-Abfallmaterials, wobei das Poly(ethylenterephthalat)-Abfallmaterial gemischt wird mit einem Modifikator bzw. Modifikatoren auf Siliciumbasis und wobei der Modifikator bzw. die Modifikatoren auf Siliciumbasis organofunktionelle Silane der Formel 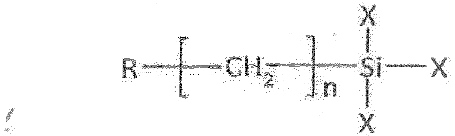 darstellen, wobei X eine leicht hydrolysierbare Gruppe, ausgewählt unter Alkoxy, Polyalkoxy oder Halogen ist und R eine organofunktionelle Gruppe, mit Silicum verknüpft über eine Alkylbrücke, und deren Gemische mit Siliciumderivaten, ausgewählt aus der Gruppe der Siloxane, Silazane, Silicate oder Silane, sowohl in unverzeigter als auch in verzweigter Form, einschließlich deren monomere, oligomere, polymere oder copolymere Formen, in einer mono- und multifunktionellen Form, sowie deren Makromere darstellt, in einer Gesamtkonzentration von 0,01 bis 10 Gew.-%, bezogen auf das Gewicht des Poly(ethylenterephthalat)-Abfallmaterials, und wobei das Verfahren die folgenden Stufen umfasst:
· mechanisches Recyceln des Poly(ethylenterephthalat)-Abfallstroms, einschließlich der üblichen Arbeitsgänge des Schredderns, Sortierens, Waschens Spülens und Trocknens zur Gewinnung von Flocken,
· chemische Veredelung der Flocken in einem Reaktor durch Mischen der Polyesterflocken in Anwesenheit des Modifikators bzw. der Modifikatoren auf Siliciumbasis bei erhöhter Temperatur von unter 200 °C und bei einer Verweildauer von 1 Stunde oder darunter und
· Extrusion unter nachfolgender Granulierung zur Erzeugung des halbkristallinen Endproduktes,
wobei die Stufe der chemischen Veredelung der Flocken zu einer verbesserten Wärme- und Hydrolysebeständigkeit des modifizierten Produktes verglichen mit dem unbehandeltem Gegenstück als Folge einer verminderten Konzentration an Carboxylendgruppen (CEG) führt.

2. Verfahren nach Anspruch 1, wobei die organofunktionellen Silane ausgewählt werden aus der Gruppe der vinyl- oder divinylendständigen Silane, allylendständigen Silane, 3-Aminopropyl- oder bis(2-hydroxyethyl)-3-aminopropyl-endständigen Silane als Aminderivate, 2-(3,4-Epoxycyclohexyl)ethyl-und 3-Glveiaoxypropyl-endständigen Silane als Epoxyderivate, Isocyanatopropyl-endständigen Silane als Isocyanatderivate, 3-Methacryloxypropylendständigen Silane als Methacrylderivate und 2-(Diphenylphosphino)ethyl-endständigen Silane als Phosphorderivate.

3. Verfahren nach einem der vorhergehenden Ansprüche, wobei die Gesamtkonzentration des
Modifikators bzw. der Modifikatoren auf Siliciumbasis 0,1 bis 5 Gew.-% beträgt, bezogen auf das Gewicht des Poly(ehtylenterephthalat)-Abfallmaterials.

4. Verfahren nach Anspruch 3, wobei die Temperatur unter 150 °C liegt.

## Revendications

1. Procédé de valorisation de déchets de poly(éthylène téréphtalate) dans lequel les déchets de poly(éthylène téréphtalate) sont mélangés avec un(des) modificateur(s) à base de silicium et dans lequel le(s) modificateur(s) à base de silicium sont des silanes organofonctionnels de la formule, 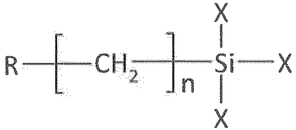 dans laquelle X est un groupe facilement hydrolysable choisi parmi un alcoxy, un polyalcoxy ou un halogène et R représente un groupe organofonctionnel attaché au silicium par un pont alkyle et leurs mélanges avec des dérivés de silicium choisis dans le groupe des siloxanes, des silazanes, des silicates ou des silanes, aussi bien sous forme linéaire que ramifiée, y compris leurs formes monomères, oligomères, polymères ou copolymères, sous une forme mono et multifonctionnelle, ainsi que les macromères de ceux-ci, à une concentration totale de 0,01 à 10% en poids, par rapport au poids du poly(éthylène téréphtalate) et dans lequel le procédé comprend les étapes suivantes :
• recyclage mécanique du flux de déchets de poly(éthylène téréphtalate), comprenant des opérations standard de déchiquetage, de tri, de lavage, de rinçage et de séchage pour obtenir des flocons,
• valorisation chimique des flocons dans un réacteur par mélange des flocons de polyester en présence dudit(desdits) modificateur(s) à base de silicium à une température élevée inférieure à 200 °C et pendant un temps de séjour d'une heure ou moins,
• extrusion suivie d'une granulation pour produire le produit final semi-cristallin, dans lequel l'étape de valorisation chimique des flocons conduit à une stabilité thermique et hydrolytique améliorée du produit modifié par rapport à sa contrepartie non traitée, du fait d'une concentration réduite de groupes terminaux carboxyliques (CEG).

2. Procédé selon la revendication 1, dans lequel les silanes organofonctionnels sont choisis dans le groupe des silanes à terminaison vinyle ou divinyle, des dérivés à terminaison allyle, des silanes à terminaison 3-amino-propyle ou bis(2-hydroxyéthyl)-3-aminopropyle en tant que dérivés amine, des silanes à terminaison 2-(3,4-époxycyclohexyl)éthyle et 3-glycidoxypropyle en tant que dérivés époxy, des silanes à terminaison isocyanatopropyle en tant que dérivé isocyanate, des silanes à terminaison 3-méthacryloxypropyle en tant que dérivé méthacrylate et des silanes à terminaison 2-(diphénylphosphino)éthyle en tant que dérivé phosphine.

3. Procédé selon l'une quelconque des revendications précédentes, dans lequel la concentration totale du(des) modificateur(s) à base de silicium est de 0,1 à 5 % en poids par rapport au poids des déchets de poly(éthylène téréphtalate).

4. Procédé selon la revendication 3, dans lequel la température est inférieure à 150 °C.
